# EUROPÄISCHE PATENTSCHRIFT

(11) **EP 0 796 399 B1**
(45) Veröffentlichungstag und Bekanntmachung des Hinweises auf die Patenterteilung: **23.09.1998**
(21) Anmeldenummer: 95942657.8
(22) Anmeldetag: 05.12.1995
(51) Int. Cl.: F16C 25/08

(54) **VORRICHTUNG ZUM REGELN DER VORSPANNUNG VON DREHLAGERN**
DEVICE FOR REGULATING THE PRESTRESS OF ROTARY BEARINGS
DISPOSITIF PERMETTANT DE REGULER LA PRECONTRAINTE DE PALIERS ROTATIFS

(30) Priorität: 07.12.1994 DE 9419561 U
(43) Veröffentlichungstag der Anmeldung: 24.09.1997
(73) Patentinhaber: Vites, Boris, 52066 Aachen (DE)
(72) Erfinder: Vites, Boris, 52066 Aachen (DE)
(74) Vertreter: Czybulka, Uwe, Dipl.-Phys.
(86) Internationale Anmeldenummer: DE9501880
(87) Internationale Veröffentlichungsnummer: WO9618048

(56) Entgegenhaltungen:
- DE-U- 9 404 249
- DE-U- 9 419 561
- FR-A- 2 214 834
- US-A- 1 854 276

## Beschreibung

Die Erfindung bezieht sich auf eine Spindeleinheit mit einer Spindel, einem Gehäuse, Wälzlagern, die an zwei voneinander beabstandeten Stellen die Spindel im Gehäuse abstützen und die vorgespannt sind, und mit einem Zentrifugalregler, der die Vorspannung auf die Wälzlager bei steigender Drehzahl verringert, wobei der Zentrifugalregler als federnde Axialspreizbuchse mit elastischen bogenartigen Teilen zwischen zwei Druckelementen und je einer Masse auf den bogenartigen Teilen hergestellt ist.

Eine derartige Spindeleinrichtung ist aus der DE-U-94 04 249 bekannt. Derartige Spindeleinheiten finden ihre Verwendung z.B. im Werkzeugmaschinenbau. Mit einer solchen Spindeleinheit kann die Vorspannung der Wälzlager der Spindel bei einer Hochgeschwindigkeitsbearbeitung verringert werden. Die Spindeleinheiten können ebenso in ähnlichen Baugruppen verschiedener Maschinen Verwendung finden. Der in der bekannten Konstruktion benutzte Regler sichert die korrekte Zuordnung zwischen Drehzahl der Spindel und Vorspannung der Wälzlager, die praktisch mit der empfohlenen Drehzahl-Vorspannungszuordnung kongruent ist; vgl. z.B. den Katalog 3700 T: SKF Genauigkeitslager, S. 64, Reg. 47150001987 - 03, gedruckt in der Bundesrepublik Deutschland bei Weppert GmbH & Co. KG. Im Vergleich zu den herkömmlichen Konstruktionen mit hydraulischer Steuerung der Vorspannung der Spindellager, wie dieses z.B. aus der Zeitschrift "Konstruktion", Nr. 44, S. A20, 1992 zu HSC-Spindeln beschrieben ist, ist die Spindeleinheit gemäß dem obigen deutschen Gebrauchsmuster einfacher konstruiert.

Dadurch, daß die Änderung der Vorspannung der Spindellager durch die Verschiebung der inneren sich drehenden Lagerringe bedingt ist, kann es zu einer Reibkorrosion auf der äußeren Fläche der Spindel kommen; vgl. z.B. Tribology Handbook, Herausgeber M.J. Neale, London, Butterworth, 1973, Kapitel E7. Bei der genannten bekannten Konstruktion befindet sich der Regler mit seinen elastischen bogenartigen Teilen und den auf diesen angeordneten Massen zwischen den Lagern für die Spindel.

Der Erfindung liegt die Aufgabe zugrunde, eine Spindeleinheit der in Rede stehenden Art so zu verbessern, daß eine Spindelkorrosion durch die Verschiebung der inneren Lagerringe bezüglich der Spindel vermieden wird, so daß die Lebensdauer der Spindeleinheit erhöht wird.

Gemäß der Erfindung wird dieses dadurch erreicht, daß der Regler über Reglerwälzlager an seinen beiden Enden auf dem Gehäuse der Spindeleinheit abgestützt ist, daß der Regler die Spindel nicht berührt, daß die äußeren sich nicht drehenden Ringe der Reglerwälzlager auf die äußeren Ringe der Spindellager drücken, und daß der Regler mit Hilfe eines federnden Elementes in Drehung versetzt wird, das eine große Verdrehungs- und eine kleine Biegesteifigkeit besitzt, die eine axiale Bewegung des Reglers gegenüber der Spindel zuläßt, wobei das federnde Element fest mit der Spindel und dem Regler verbunden ist.

Der Regler wirkt somit auf die Außenringe ein und ist axial beweglich zu der Spindel angeordnet. Hierdurch wird die Gefahr der Spindelkorrosion beseitigt, da die Druckringe des Reglers während der Regelung der Vorspannung die äußeren, sich nicht drehenden Ringe der Lager der Spindel verschieben.

Der Regler befindet sich üblicherweise zwischen den Lagern der Spindel und benötigt nur wenig Platz. Es ist jedoch auch möglich, den Regler außerhalb der Spindel anzubringen, wodurch vorhandene Spindeleinheiten umgerüstet werden können. Hierzu ist der Regler außerhalb der Strecke, an deren Enden sich jeweils die Spindellager befinden, angebracht, wobei dann das Bogenprofil der elastischen Teile des Reglers eine konkave Form besitzt. Mit einer derartigen Konstruktion sind nur minimale Veränderungen der Konstruktion vorhandener Spindeleinheiten notwendig.

Die Erfindung ist in zwei Ausführungsbeispielen anhand der Zeichnung näher erläutert. In dieser stellen dar:
- Fig. 1: einen Längsschnitt durch ein erstes Ausführungsbeispiel einer Spindeleinheit gemäß der Erfindung;
- Fig. 2: einen Schnitt längs A-B in Fig. 1;
- Fig. 3: einen Längsschnitt durch ein zweites Ausführungsbeispiel einer Spindeleinheit gemäß der Erfindung mit einem außerhalb der Spindel gelegenen Regler;
- Fig. 4: einen Schnitt längs C-D in Fig. 3.

Eine Spindeleinheit weist ein Gehäuse 1 mit Spindel lagern 2, 3 und 4 für eine Spindel 5 auf. Zur Erzeugung einer Grundvorspannung und der Regelung der Vorspannung ist ein Zentrifugalregler vorgesehen, der aus elastischen Teilen 6, darauf angeordneten Massen 7 und Druckringen 8 und 9 besteht. Die elastischen Teile 6, die Massen 7 und die Druckringe 8, 9 sind als ein Teil hergestellt. Das Bogenprofil der elastischen Teile 6 besitzt eine konvexe Form. Der Regler ist an seinen beiden Enden über Reglerwälzlager 10, 11 an dem Gehäuse 1 der Spindeleinheit abgestützt. Eine ringförmige Membran 12, die eine große Verdrehungssteifigkeit und eine kleine Biegesteifigkeit besitzt, ist fest mit einer Abstandshülse 13 und dem Druckring 9 des Reglers verbunden. Die Abstandshülse 13 ist zwischen dem inneren Ring des Spindellagers 4 und einem Ansatz der Spindel 5 eingespannt und stellt durch die Membran 12 eine Verbindung zwischen dem Regler und der Spindel 5 her. Die Dicke der Abstandshülse 13 bestimmt auch die maximale Größe der Vorspannung der Spindellager 2, 3 und 4, d.h. mit anderen Worten, die Größe der Grundvorspannung. Ein Distanzring 14 ist zwischen den äußeren Ringen des Spindellagers 4 und des Reglerwälzlagers 11 eingespannt; der äußere Ring des Reglerwälzlagers 10 ist an einem hinteren Ansatz des Gehäuses 1 angedrückt. Eine Mutter 15 auf dem Ende der Spindel drückt mit ihrer Stirnseite auf den inneren Ring des Spindellagers 4. Die Außenringe der Spindellager 2 und 3 sind zwischen einem vorderen Ansatz des Gehäuses 1 und einem Deckel 16 eingespannt.

Die Regelung der Vorspannung der Lager wird wie folgt durchgeführt:

Zur Erzeugung der Grundvorspannung wird die Mutter 15 auf das Gewinde der Spindel 5 aufgeschraubt. Mit ihrer Stirnseite drückt die Mutter 15 auf den inneren Ring des Spindellagers 4 und über das Spindellager 4, den Distanzring 14 und das Reglerwälzlager 11 auf den Druckring 9, wodurch die Bögen der elastischen Teile 6 gebogen werden und die Spindellager 2, 3 und 4 für die Grundvorspannung beaufschlagt werden. Die Vorspannung des Spindellagers 4, d.h. die Verschiebung seines inneren Ringes bezüglich des Außenringes wird so lange vergrößert, bis die Abstandshülse 13 Kontakt mit dem Ansatz der Spindel aufnimmt. Dies trifft auch für die Spindellager 2 und 3 zu, da die gesamte Spindel und mit ihr zusammen die inneren Ringe der Spindellager 2 und 3 sich gleichzeitig bei der Erzeugung der Grundvorspannung nach hinten verschieben.

Wenn die Spindel 5 rotiert, so wird auch der Regler durch die Membran 12 in Drehung versetzt. Die inertialen Massen 7 rufen zentrifugale Kräfte hervor, und diese bewirken horizontale Zwangskräfte an den Stellen der Verankerung der gebogenen Teile 6 in den Druckringen 8 und 9 und verringezrn-dadurch die Vorspannung.

Da die ringförmige Membran 12 eine kleine Biegesteifigkeit besitzt, rufen die Verschiebungen des Druckringes 9 während der Regelung der Vorspannung keine Verschiebungen der Spindel 5 durch die Membran 12 hervor. Bei der Verringerung der Vorspannung bei Vergrößerung der Umdrehungsgeschwindigkeit der Spindel entsteht auch keine Verschiebung der inneren Ringe der Spindellager 2, 3 und 4 oder der Abstandshülse 13 bezüglich der Spindel 5. Vielmehr verschieben sich die gesamte Spindel 5 und mit ihr zusammen die inneren Ringe der Spindellager und die Abstandshülse 13 gleichzeitig nach vorne. Die Änderung der Vorspannung der Lager ist nur mit einer Verschiebung der äußeren, sich nicht drehenden Ringe des Spindellagers 4 und der Regellager 10 und 11 sowie des Distanzringes 14 bezüglich des Gehäuses 1 verbunden. Auf diese Weise wird die Gefahr einer Spindelkorrosion beseitigt.

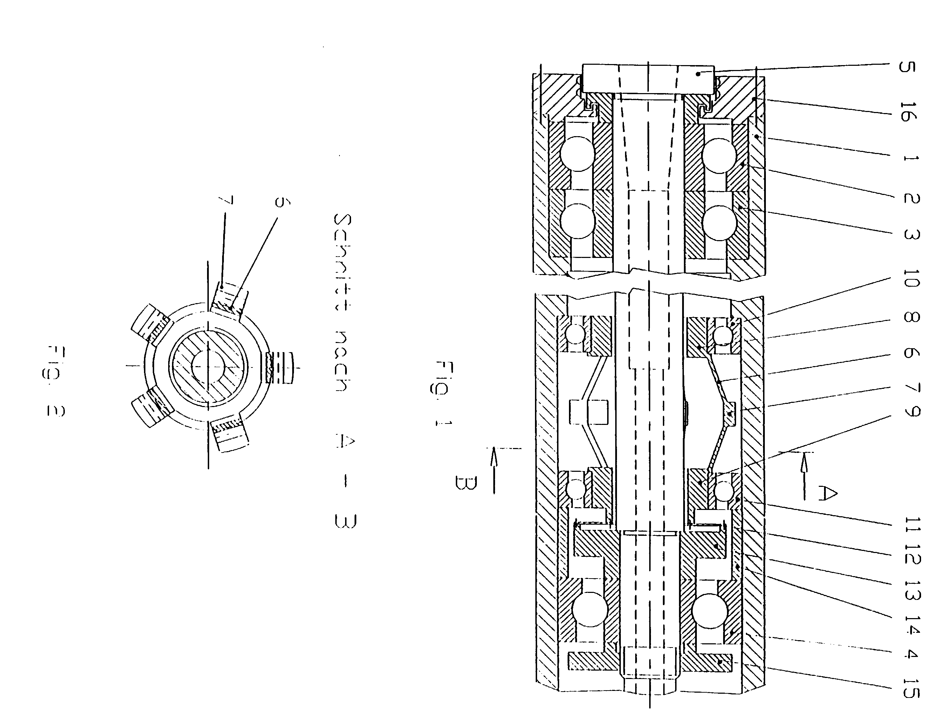

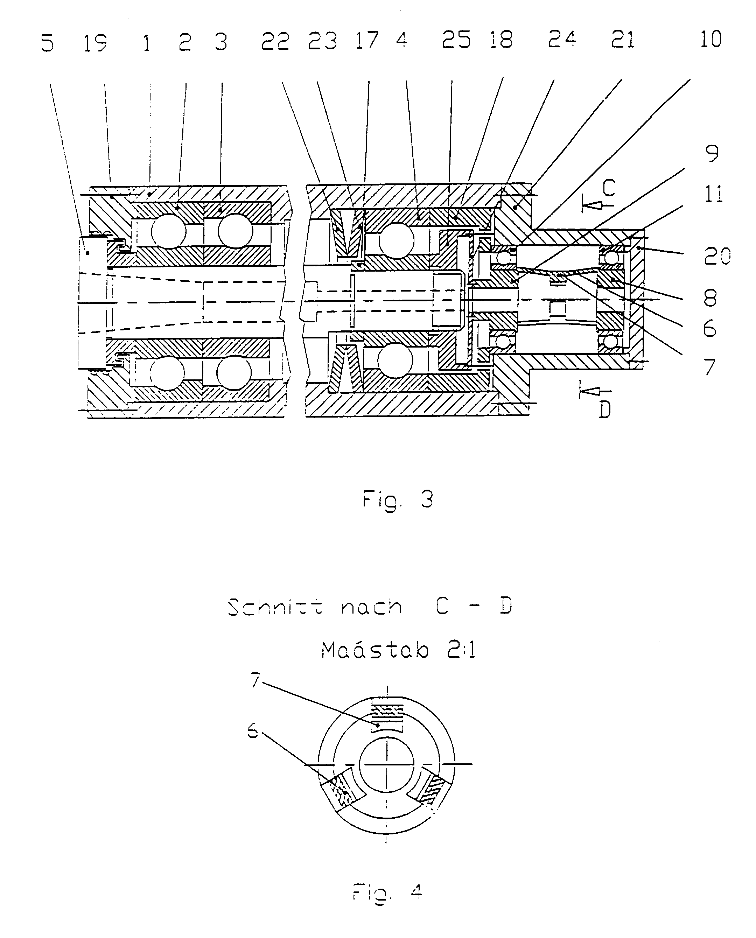

In den Fig. 3 und 4 ist ein zweites Ausführungsbeispiel einer Spindeleinheit dargestellt, wobei der Regler mit seinen Reglerlagern 10 und 11 außerhalb der Strecke liegt, an deren Enden sich die Spindellager befinden. Er ist in einem zusätzlichen Gehäuse 21 untergebracht. Die Bezugszeichen 1 bis 11 in den Fig. 3 und 4 bezeichnen gleiche Teile wie die nämlichen Bezugszeichen in den Fig. 1 und 2; das Bezugszeichen 19 in Fig. 3 ist ein Deckel der Spindeleinheit und entspricht insofern dem Deckel 16 in Fig. 1.

Bei diesem Ausführungsbeispiel besitzt das Bogenprofil der elastischen Teile 6 eine konkave Form. Das Gehäuse 21 ist fest mit dem Gehäuse 1 verbunden. Die Spindeleinheit enthält Tellerfedern 22, 23, die zwischen dem äußeren Ring des Spindellagers und einem Ansatz des Gehäuses 1 eingespannt sind. Eine ringförmige Membran 24 ist fest mit einer Mutter 25 und mit dem Druckring 9 des Reglers verbunden. Die Mutter 25 läuft auf der Spindel 5 und drückt mit ihrer Stirnseite gegen den inneren Ring des Spindellagers 4. Ein Distanzring 17 ist zwischen dem inneren Ring des Spindellagers 4 und einem Ansatz der Spindel 5 eingespannt, wobei seine Dicke die maximale Größe der Vorspannung der Spindellager 2, 3 und 4 bestimmt. Eine Abstandshülse 18 ist zwischen den äußeren Ringen des Spindellagers 4 und des Reglerlagers 10 eingespannt. Ein hinterer Deckel 20 des Gehäuses 21 drückt mit seinem ringförmigen Ansatz auf den Außenring des Reglerlagers 11. Die Dicke dieses ringförmigen Ansatzes bestimmt die vorläufige Vorspannung des deformierbaren Teiles 6. Zur Erzeugung der Grundvorspannung wird die Mutter 25 auf das Gewinde der Spindel 5 aufgeschraubt. Mit ihrer Stirnseite drückt die Mutter 25 auf den inneren Ring des Spindellagers 4 und biegt bei weiterem Anschrauben die Tellerfedern 22 und 23, wodurch die Grundvorspannung der Spindellager 2, 3 und 4 eingestellt wird. Die Vorspannung der Spindellager 2, 3 und 4 wird so lange vergrößert, bis der Distanzring 17 in Kontakt mit dem Ansatz der Spindel 5 kommt.

Bei der Drehung der Spindel 5 wird auch der Regler durch die Membran 24 in Drehung versetzt. Weil der Regler außerhalb der Strecke, an deren Enden sich jeweils die Spindellager befinden, angeordnet ist, müssen die bei der Drehung entstehenden Zwangskräfte eine Richtung haben, die derjenigen bei dem in den Fig. 1 und 2 gezeigten ersten Ausführungsform entgegengesetzt ist. Aus diesem Grunde hat das Bogenprofil der elastischen Teile 6 eine konkave Form. Im Unterschied zu dem ersten Ausführungsbeispiel gemäß den Fig. 1 und 2 vergrößert sich bei der Verringerung der Vorspannung der Spindellager 2, 3 und 4 die Vorspannung der Reglerlager 10, 11. Dadurch, daß die Reglerlager 10 und 11 einen geringeren Durchmesser als die Spindellager 2, 3 und 4 haben können, ist es möglich, sowohl für die Spindellager 2, 3 und 4 als auch für die Reglerlager 10 und 11 eine gewünschte Begrenzung der Zuordnung zwischen Drehzahl und Vorspannung zu erfüllen, wenn man für die Spindellager die Lager der Ausführung CD, Reihe 719 und für die Reglerlager die Lager der Ausführung ACD, Reihe 70 bzw. 72 mit relativ höheren Größen der Vorspannung (Klasse A, B, C) und relativ niedrigeren Drehzahlgrenzen anwendet. Dies können z.B. die folgenden Lager sein, die auf den Seiten 62, 72 und 74 des oben genannten Katalogs aufgeführt sind:
Lager 71920 CD, Bohrung 100 mm
Vorspannung nach Klasse A, B, C 230,460.920 N
Drehzahlgrenze bei der Fettschmierung 8500 U/min
Lager 7012 ACD, Bohrung 60 mm
Vorspannung nach Klasse A, B, C 240.480.960 N
Drehzahlgrenze bei der Fettschmierung 13000 U/min

Aus diesen Daten ist zu ersehen, daß die Verringerung der Vorspannung der Spindellager von einer maximalen Größe nach Klasse C bei der Drehgeschwindigkeit Null bis zur minimalen Größe nach Klasse A bei der maximalen Drehgeschwindigkeit der Drehzahlgrenze entspricht, die eine zugelassene Vergrößerung der Vorspannung der Reglerlager hervorruft.

Auf diese Weise beseitigt die vorgeschlagene Konstruktion die Gefahr der Spindelkorrosion und vereinfacht die Anwendung des Zentrifugalreglers.

## Patentansprüche

1. Spindeleinheit, die folgende Elemente beinhaltet:
- eine Spindel (5),
- ein Gehäuse (1),
- Wälzlager (2, 3, 4), die an zwei voneinander beabstandeten Stellen die Spindel im Gehäuse abstützen und vorgespannt sind, und
- ein Zentrifugalregler (6, 7, 8, 9), der die Vorspannung auf die Wälzlager bei steigender Drehzahl der Spindel verringert, wobei der Zentrifugalregler als federnde Axialspreizbuchse mit elastischen bogenartigen Teilen (6) zwischen zwei Druckelementen (8, 9) und Massen (7) auf den bogenartigen Teilen hergestellt ist,
dadurch gekennzeichnet,
a) daß der Regler über Reglerwälzlager (10, 11) an seinen beiden Enden auf dem Gehäuse (1, 21) abgestützt ist,
b) daß der Regler die Spindel (5) nicht berührt,
c) daß die äußeren, sich nicht drehenden Ringe der Reglerwälzlager(10, 11) auf die äußeren Ringe der Spindellager (4) drücken, und
d) daß der Regler mit Hilfe eines federnden Elementes (12, 24) in Drehung versetzt wird, das eine große Verdrehungs- und eine kleine Biegesteifigkeit besitzt, die eine axiale Bewegung des Reglers gegenüber der Spindel zuläßt, wobei das federnde Element fest mit der Spindel und dem Regler verbunden ist.

2. Spindeleinheit nach Anspruch 1, dadurch gekennzeichnet, daß der Regler (6, 7, 8, 9) außerhalb der Strekke, an deren Enden sich jeweils die Spindellager (2, 3, 4) befinden, angebracht ist, wobei das Bogenprofil der elastischen Teile (6) des Reglers eine konkave Form besitzt.

3. Spindeleinheit nach Anspruch 2, dadurch gekennzeichnet, daß der Regler in einem separaten Gehäuse (21) angeordnet ist.

4. Spindeleinheit nach einem der vorhergehenden Ansprüche, dadurch gekennzeichnet, daß die elastischen Teile (6) mit den Massen (7) und den Lagerringen (8, 9) einteilig sind.

## Claims

1. Spindle unit which comprises the following elements:
- a spindle (5),
- a housing (1),
- rolling bearings (2, 3, 4) which support the spindle in the housing at two points, separated from one another, and which are pre-loaded, and
- a centrifugal governor (6, 7, 8, 9) which reduces the pre-loading on the rolling bearings as the rotational speed of the spindle increases, with the centrifugal governor being manufactured as a sprung axially spreading bush with flexible, bow-type parts (6) between two pressure elements (8, 9), and weight masses (7) on the bow-type parts,
**characterized in that**
a) the governor is supported via governor rolling bearings (10, 11) at its two ends on the housing (1, 21);
b) the governor does not contact the spindle (5);
c) the outer, non-rotating rings of the governor rolling bearings (10, 11) press on the outer rings of the spindle bearing (4); and
d) the governor is caused to rotate with the aid of a sprung element (12, 24), which has a high torsional stiffness and low bending stiffness, which permits an axial movement of the governor relative to the spindle, with the sprung element being firmly connected with the spindle and the governor.

2. Spindle unit in accordance with claim 1, **characterized in that** the governor (6, 7, 8, 9) is fitted outside the section on whose ends the spindle bearings (2, 3, 4) are located in each case, with the bow profile of the elastic parts (6) of the governor having a concave form.

3. Spindle unit in accordance with claim 2, **characterized in that** the governor is arranged in a separate housing (21).

4. Spindle unit in accordance with one of the preceding claims, **characterized in that** the elastic parts (6) are of one piece with the weight masses (7) and the bearing rings (8, 9).

## Revendications

1. Module d'axe comportant les éléments suivants :
- un axe (5),
- un boîtier (1),
- des roulements à billes (2, 3, 4) précontraints supportant l'arbre dans le boîtier en deux positions écartées, et
- un régulateur centrifuge (6, 7, 8, 9) qui diminue la précontrainte sur les roulements à billes lorsque la vitesse de rotation de l'axe augmente, le régulateur centrifuge étant formé d'un manchon à expansion élastique axiale comportant des pièces élastiques arquées (6) entre deux éléments d'appui (8, 9) et des masselottes (7) sur les pièces arquées, caractérisé en ce que :
a) le régulateur est supporté à ses deux extrémités dans le boîtier (1, 21) par des roulements à billes de régulateur (10, 11),
b) le régulateur n'entre pas en contact avec l'axe (5),
c) les bagues externes non-tournantes des roulements à billes de régulateur (10, 11) appuient sur les bagues externes des roulements d'axe (4), et
d) le régulateur est déplacé en rotation à l'aide d'un élément élastique (12, 24) qui a une rigidité élevée en rotation et une rigidité faible en flexion, permettant un déplacement axial du régulateur par rapport à l'axe, l'élément élastique étant fixé à l'axe et au régulateur.

2. Module d'axe selon la revendication 1, caractérisé en ce que le régulateur (6, 7, 8, 9) est rapporté en dehors de la zone aux extrémités de laquelle se trouvent les roulements d'axe (2, 3, 4), le profil arqué des pièces élastiques (6) du régulateur ayant une forme concave.

3. Module d'axe selon la revendication 2, caractérisé en ce que le régulateur est disposé dans un boîtier séparé (21).

4. Module d'axe selon l'une quelconque des revendications précédentes, caractérisé en ce que les pièces élastiques (6) forment une seule pièce avec les masselottes (7) et les bagues de roulement (8, 9).
